# EUROPEAN PATENT APPLICATION

(11) **EP 4 495 455 A1**
(43) Date of publication of application: **22.01.2025**
(21) Application number: 23770290.7
(22) Date of filing: 21.02.2023
(51) Int. Cl.: F16G 1/00, B29D 29/08, F16G 5/00, F16G 5/06, F16G 5/20

(54) **BELT, BELT DRIVING SYSTEM, AND BELT MANUFACTURING METHOD**

(30) Priority: 15.03.2022 JP 2022040140
(71) Applicant: Bando Chemical Industries, Ltd., Kobe-shi, Hyogo 650-0047 (JP)
(72) Inventor: ARAI, Toshio, Kobe-shi, Hyogo 650-0047 (JP)
(74) Representative: Isarpatent
(86) International application number: PCT/JP2023/006193
(87) International publication number: WO 2023/176331

(57) **Abstract**

A belt including an RFID tag, in which the RFID tag includes an IC chip, and an antenna formed of a conductor, the antenna includes a connection part which is connected to the IC chip, and at the connection part, the conductor is connected to the IC chip in a width direction of the belt.

## Description

### CROSS-REFERENCE TO RELATED APPLICATION

This application claims priority to Japanese Patent Application No. 2022-40140, the disclosure of which is incorporated herein by reference in its entirety.

### FIELD

The present invention relates to a belt, and specifically to a belt including an RFID tag. The present invention also relates to a belt drive system including the belt. The present invention further relates to a method for manufacturing a belt.

### BACKGROUND

Belts, such as transmission belts or conveyance belts, are used in various products including belt drive system. Transmission belts or conveyance belts are usually formed into an endless shape, and are used in a state of being wound around a plurality of pulleys including driving pulleys and driven pulleys. The belts of this kind are bent and expanded by the pulleys many times during running of the belt over a certain period of time. In a belt drive system, there may be cases in which the belt is used in the form of a strip shape instead of being used in the form of an endless shape. Also in such cases, the belt is used in a state of being wound around pulleys in many cases. That is, a conventional belt drive system includes pulleys, and a belt which is wound around the pulleys.

Usually, a belt drive system is inspected to prevent accidents caused by failure or the like. For example, the conditions of the belt are periodically inspected so as to prevent accidents caused by damage to the belt.

Recently, an attempt to use an RFID tag has been made to simplify an inspection of a belt drive system. The RFID tag includes an IC chip and an antenna, and is configured to be able to transmit information in IC chip by wireless communication with an RFID reader writer. Accordingly, with the belt including the RFID tag, belt information stored in the IC chip can be read in a non-contact manner.

Patent Literature 1 describes a transmission belt which includes an RFID tag and a pressure sensor connected to the RFID tag, and which is configured to store data detected by the pressure sensor in a memory of an IC chip. Patent Literature 1 describes that pressure data read from the RFID tag by an RFID reader writer are used as information for checking the conditions of the belt.

### CITATION LIST

### Patent Literature

Patent Literature 1: Japanese Patent No. 6741889

### SUMMARY

### Technical Problem

In the belt drive system, a load is applied to a belt and hence, there is a possibility of an RFID tag being damaged by such a load. In addition, it is necessary to take measures to prevent damage to the RFID tag also at the time of manufacturing a belt.

The present invention has been made under the above-mentioned circumstances, and it is an object of the present invention to provide a belt in which damage to an RFID tag is suppressed, to provide a belt drive system in which damage to an RFID tag is suppressed, and to provide a method for manufacturing a belt in which damage to an RFID tag can be suppressed.

### Solution to Problem

Inventors of the present invention have found that, in the case in which a belt drive system is formed of a belt including an RFID tag, disconnection of an antenna easily occurs at a particular position. As a result of conducting studies, the inventors of the present invention have found the disposition of an antenna at which disconnection is less likely to occur at such a position, and thus completed the present invention.

That is, a belt according to the present invention is a belt including an RFID tag, wherein
the RFID tag includes an IC chip, and an antenna which is formed of a conductor,
the antenna includes a connection part which is connected to the IC chip, and
at the connection part, the conductor is connected to the IC chip in a width direction of the belt.

In the belt according to the present invention, it is preferable that
at the connection part, a plurality of conductors be connected to the IC chip, and at least one of the plurality of conductors be connected to the IC chip in the width direction of the belt.

It is preferable that the belt according to the present invention include
a belt body which includes a core layer, a first rubber layer or a second rubber layer, and an adhesive rubber layer, the core layer being formed of a core wire or canvas, the first rubber layer being disposed on the core layer from one side, the second rubber layer being disposed on the core layer from an other side, the adhesive rubber layer causing the first rubber layer or the second rubber layer to adhere to the core layer, wherein
the RFID tag is embedded in the adhesive rubber layer.

It is preferable that the belt according to the present invention include: a core layer formed of a core wire or canvas; and a first rubber layer disposed on the core layer from one side or a second rubber layer disposed on the core layer from an other side, wherein
the RFID tag is disposed at a boundary between the core layer and the first rubber layer or the second rubber layer, and
the conductor is formed of a metal foil or a conductive fiber.

A belt drive system according to the present invention is a belt drive system including: a pulley; and any of the aforementioned belts wound around the pulley, wherein
the belt includes a belt body and the RFID tag which is included in the belt body,
the belt body is expanded/contracted and deformed by receiving a bending load from the pulley, and
the RFID tag is included in the belt body at a position at which an expansion/contraction rate of the belt body is 10% or less, preferably the expansion/contraction rate is 3% or less.

A method for manufacturing a belt according to the present invention is a method for manufacturing a belt including an RFID tag, in which the RFID tag includes an IC chip, and an antenna formed of a conductor in the belt, the antenna including a connection part which is connected to the IC chip, the method including:
a primary molding step of molding an unvulcanized rubber sheet to obtain a primary molded body;
an installation step of installing the RFID tag in the primary molded body to obtain a tagged primary molded body; and
a secondary molding step of further molding the tagged primary molded body to obtain a belt molded body, to thereby manufacture the belt in which, at the connection part, the conductor is connected to the IC chip in a width direction of the belt.

In the method for manufacturing the belt according to the present invention, a preferable configuration is such that
the belt includes a belt body which includes a core layer, a first rubber layer or a second rubber layer, and an adhesive rubber layer, the core layer being formed of a core wire or canvas, the first rubber layer being disposed on the core layer from one side, the second rubber layer being disposed on the core layer from an other side, the adhesive rubber layer causing the first rubber layer or the second rubber layer to adhere to the core layer,
the rubber sheet includes a rubber sheet for a rubber layer and an adhesive rubber sheet, the rubber sheet forming the first rubber layer or the second rubber layer, the adhesive rubber sheet forming the adhesive rubber layer, and
in the installation step, the RFID tag is installed in such a way as to be brought into contact with the adhesive rubber sheet.

### BRIEF DESCRIPTION OF DRAWINGS

Fig. 1 is a schematic view of a belt drive system according to one embodiment.
Fig. 2 is a cross-sectional view of a belt according to one embodiment.
Fig. 3 is a view showing the inside of the belt when the belt shown in Fig. 2 is viewed from the outer surface side.
Fig. 4 is a view for illustrating an expansion/contraction rate of the belt included in the belt drive system.
Fig. 5 is an enlarged view of a connection part of an RFID tag included in the belt shown in Fig. 2.
Fig. 6 is a view showing a variation 1 of the RFID tag.
Fig. 7 is a view showing a variation 2 of the RFID tag.
Fig. 8 is a view showing a variation 3 of the RFID tag.
Fig. 9 is a view showing a variation 4 of the RFID tag.

### DESCRIPTION OF EMBODIMENTS

Hereinafter, a belt according to one embodiment will be described with reference to drawings.

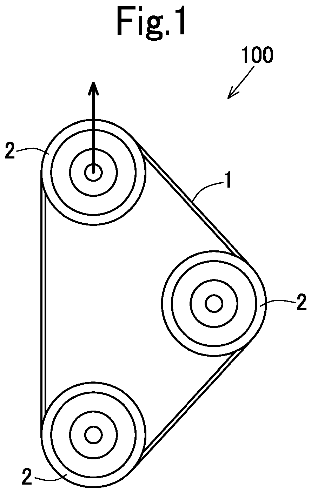

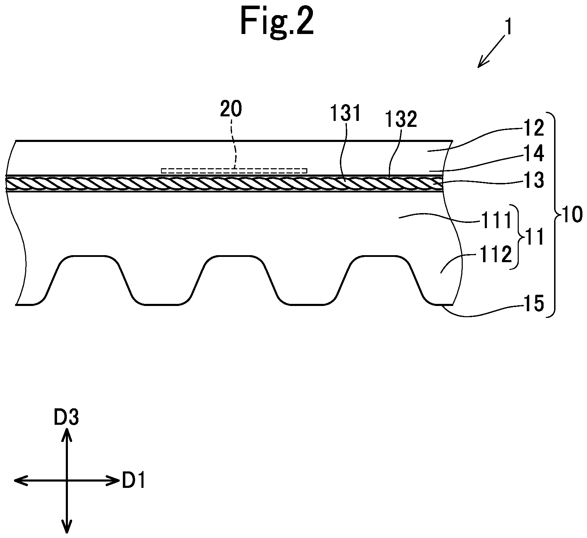

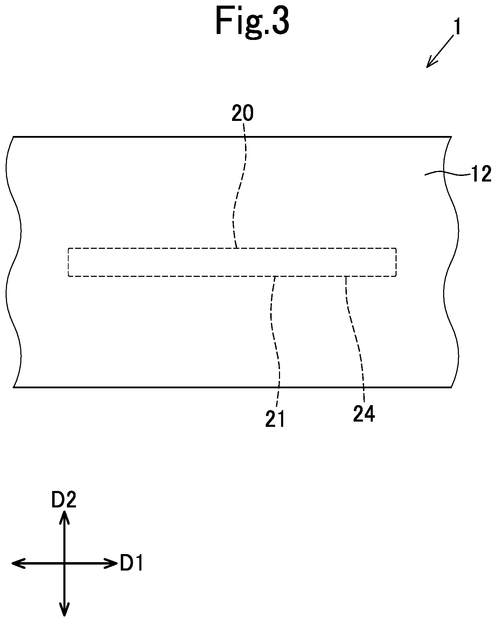

As shown in Fig. 1, a belt 1 of this embodiment forms a belt drive system 100. The belt drive system 100 includes a plurality of pulleys 2, and the belt 1 which is wound around the plurality of pulleys 2. The belt 1 of this embodiment is a transmission belt used to transmit power between the pulleys. The belt 1 of this embodiment is also a rubber belt formed of a rubber composition. As shown in Fig. 2 and Fig. 3, the belt 1 of this embodiment has a length direction D1 (belt length direction), a width direction D2 (belt width direction) orthogonal to the length direction D1, and a thickness direction D3 (belt thickness direction) orthogonal to the length direction D1 and the width direction D2.

The belt 1 of this embodiment has an endless shape, and has an inner peripheral surface and an outer peripheral surface, the inner peripheral surface being a surface on one side which is brought into contact with the pulleys when the belt 1 is wound around the pulleys, the outer peripheral surface being a surface on the other side which is the opposite side to the inner peripheral surface.

As shown in Fig. 2 and Fig. 3, the belt 1 of this embodiment includes a belt body 10 and an RFID tag 20, the belt body 10 being formed of a plurality of rubber layers overlapping in the belt thickness direction, the RFID tag 20 being embedded in the belt body 10.

The belt 1 of this embodiment includes protruding parts which protrude inward. The belt 1 of this embodiment includes a plurality of protruding parts on the inner peripheral surface side. The plurality of protruding parts are provided at a constant pitch in the belt length direction D1, and recessed portions are formed between adjacent protruding parts. The belt 1 of this embodiment includes, on the inner peripheral surface side, a shape in which the protruding part and the recessed portion are alternately repeated in the belt length direction D1 (circumferential direction).

The belt body 10 in this embodiment includes an inner rubber layer 11 and an outer rubber layer 12, the inner rubber layer 11 being a first rubber layer which includes tooth parts 112 meshing with the respective pulleys 2, the outer rubber layer 12 being a second rubber layer which forms the surface on the outer peripheral side. The belt body 10 in this embodiment also includes a core layer 13 and an adhesive rubber layer 14, the core layer 13 being formed of core wires 131, the adhesive rubber layer 14 causing the outer rubber layer 12 to adhere to the core layer 13. The belt of the present invention can also include an adhesive rubber layer which causes the inner rubber layer 11 to adhere to the core layer 13.

The belt 1 of this embodiment also includes a reinforcing layer 15 which reinforces the inner rubber layer 11. The reinforcing layer 15 forms the surface of the belt body 10 on the inner peripheral side. Hereinafter, of the thickness directions D3 of the belt body 10, a direction from the outer peripheral side toward the inner peripheral side is referred to as an inward direction in the thickness direction, and a direction from the inner peripheral side toward the outer peripheral side is referred to as an outward direction in the thickness direction.

As described above, an example of the belt 1 of this embodiment is a toothed belt including a plurality of teeth forming the protruding parts. The teeth of the toothed belt are formed of the tooth parts 112 of the inner rubber layer 11 and the reinforcing layer 15, which covers the tooth parts 112 from the inner peripheral surface side in such a way as to conform to the recessed and protruding shape of the inner rubber layer 11 on the inner peripheral surface side.

The inner rubber layer 11 includes a base part 111 and the plurality of tooth parts 112, the base part 111 being disposed adjacent to the core layer 13 and having a strip shape, the plurality of tooth parts 112 protruding from the base part 111 in the inward direction in the thickness direction. The plurality of tooth parts 112 are arranged along the length direction D1, and are formed at a predetermined tooth pitch.

The outer rubber layer 12 and the adhesive rubber layer 14 are formed into a strip shape.

Examples of a rubber component of a rubber composition forming the inner rubber layer 11, the outer rubber layer 12, or the adhesive rubber layer 14 include natural rubber (NR), butadiene rubber (BR), styrene-butadiene rubber (SBR), ethylene-propylene rubber (EPR), ethylene-propylene-diene rubber (EPDM), isoprene rubber (IR), acrylonitrile-butadiene rubber (NBR), hydrogenated nitrile rubber (HNBR), isobutylene-isoprene rubber (IIR), chloroprene rubber (CR), chlorosulfonated polyethylene rubber (CSM), chlorinated butyl rubber (CIIR), brominated butyl rubber (BIIR), silicone rubber (SR), urethane rubber (UR), acryl rubber (ACR), and fluororubber (FR). One kind of rubber component may be used alone, or multiple kinds of rubber component may be used in combination.

The rubber composition may also contain an additive in addition to the rubber component. Examples of such an additive include a filler, such as carbon black, silica, or calcium carbonate, a flame retardant, such as ethylenebistetrabromophthalimide, a crosslinking agent, such as sulfur or organic peroxide, a vulcanization accelerator, such as zinc oxide, a plasticizer, such as dioctyl adipate, a hardness adjusting agent, such as paraffin oil, an antioxidant, such as benzimidazole compound, and a lubricant.

The core layer 13 in this embodiment is formed of the core wires 131 and an adhesive rubber 132, which causes the core wires 131 to adhere to the inner rubber layer 11 and the outer rubber layer 12. Alternatively, the core layer 13 can also be formed of a canvas. Examples of fiber that forms the core wire 131 include synthetic fibers, such as polyester fiber, polyamide fiber, or aramid fiber, and inorganic fibers, such as carbon fiber or glass fiber. Examples of fiber that forms the canvas include synthetic fibers, such as polyester fiber, polyamide fiber, and aramid fiber.

The reinforcing layer 15 is formed of a fabric material, such as a woven fabric, a knitted fabric, or a non-woven fabric, which is formed of yarns of cotton, polyamide fiber, polyester fiber, aramid fiber, or the like.

In the belt 1 of this embodiment, the RFID tag 20 is embedded in the adhesive rubber layer 14. Alternatively, the RFID tag 20 can be disposed at a boundary between the core layer 13 and the adhesive rubber layer 14, or can be disposed at a boundary between the adhesive rubber layer 14 and the outer rubber layer 12.

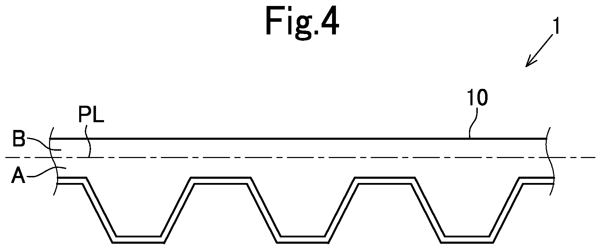

As shown in Fig. 1 and Fig. 4, in the belt drive system 100, the belt body 10 receives a bending load from each pulley 2, thus being expanded/contracted and deformed. Due to this expansion/contraction deformation, a pitch line PL which is not expanded/contracted in the thickness direction is formed in the belt body 10 according to the diameter of each of the pulleys 2. To be more specific, in the belt drive system 100, an inner region A and an outer region B are formed in the belt body 10, the inner region A being contracted in the thickness direction due to a bending load caused by each of the pulleys, the outer region B being expanded in the thickness direction due to the bending load caused by each of the pulleys, and the pitch line PL is formed between the inner region A and the outer region B, the pitch line PL being not expanded/contracted in the thickness direction. Each of the pulleys 2 has a certain pitch diameter r and hence, at each of portions of the belt body 10 which is bent due to each corresponding one of the pulleys 2, the inner region A and the outer region B are expanded/contracted in the thickness direction at predetermined expansion/contraction rates (%).

The above-mentioned expansion/contraction rate (%) will be specifically described. First, an arbitrary position P in the thickness direction of the belt body 10 may be an unexpanded/uncontracted position in a state of being in a flat shape without being bent or may be an expanded/contracted position being located at a position deviated from the unexpanded/uncontracted position in the inward or outward direction in the thickness direction by being bent by a corresponding pulley 2. In the inner region A, the expanded/contracted position is a position that is deviated from the unexpanded/uncontracted position in the inward direction in the thickness direction and, in the outer region B, the expanded/contracted position is a position that is deviated from the unexpanded/uncontracted position in the outward direction in the thickness direction. Assuming a distance between the rotation center of the pulley and the expanded/contracted position as D (mm), and an amount of positional deviation from the unexpanded/uncontracted position to the expanded/contracted position as G (mm), an expansion/contraction rate (%) in the thickness direction at the expanded/contracted position is calculated by G/D × 100.

In the belt drive system 100, the RFID tag 20 in this embodiment is included in the belt body 10 at a position at which the expansion/contraction rate of the belt body 10 is 10% or less, preferably 3% or less. For example, the RFID tag 20 can be included in the belt body 10 at a position which is located outward of the core layer 13, and at which an expansion/contraction rate is a certain value. More specifically, the RFID tag 20 is included in the adhesive rubber layer 14 at a position at which the expansion/contraction rate is 10% or less, preferably 3% or less. Therefore, damage to the RFID tag 20 is suppressed in the belt drive system 100. Compared with the inner rubber layer 11 in which flow of rubber components is liable to be generated due to molding of the tooth parts 112 at the time of molding the belt, the outer rubber layer 12 or the adhesive rubber layer 14 having a strip shape has a smaller amount of flow of rubber components at the time of molding the belt. Accordingly, by embedding the RFID tag 20 at a certain position of the outer rubber layer 12 or the adhesive rubber layer 14, the RFID tag 20 becomes less likely to receive damage caused by a flow of rubber components at the time of molding the belt.

The belt drive system 100 of this embodiment includes an RFID reader writer which is disposed in such a way as to face the surface of the belt body 10 on the outer peripheral side. With such a disposition, electromagnetic waves from the RFID reader writer are not blocked by the core layer 13 and hence, quality of communication between the RFID reader writer and the RFID tag 20 can be enhanced. In the case in which the pulleys 2 are made of metal, electromagnetic waves are not blocked by the pulleys 2 and hence, such a configuration is preferable.

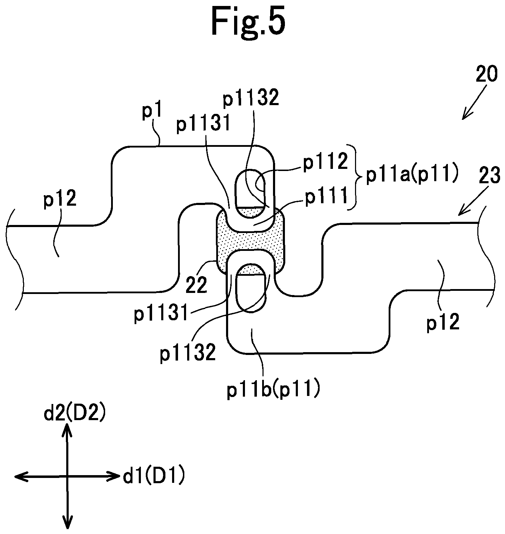

As shown in Fig. 5, the RFID tag 20 in this embodiment has a sheet shape having a small thickness, and is formed to elongate in one direction, thus having a longitudinal direction d1 and a lateral direction d2. As shown in Fig. 3 and Fig. 5, the RFID tag 20 in this embodiment includes a base material sheet 21, an IC chip 22, and an antenna 23. The IC chip 22 and the antenna 23 are mounted on the base material sheet 21 in a state of not protruding from the base material sheet 21. Thus, in this embodiment, the outer edge of the base material sheet 21 defines the outer edge of the RFID tag 20. The RFID tag 20 in this embodiment includes the base material sheet 21, the IC chip 22, the antenna 23, and a protective sheet 24, the base material sheet 21 having a rectangular shape, the IC chip 22 being provided at a center part of the base material sheet 21, the antenna 23 extending from the IC chip 22 toward both ends (both ends in the longitudinal direction d1) of the base material sheet 21, the protective sheet 24 sandwiching the IC chip 22 and the antenna 23 in cooperation with the base material sheet 21.

The base material sheet 21 is formed of a film made of resin. Examples of the film include a film made of polyethylene terephthalate (PET) and a film made of polypropylene (PP).

The IC chip 22 is electrically connected to the antenna 23. The IC chip 22 includes a memory which stores temperature data detected by a temperature sensor. The antenna 23 is configured to generate an electric current by electromagnetic waves from the RFID reader writer, and the IC chip 22 is formed to be driven by the electric current generated by the antenna 23. That is, the RFID tag 20 in this embodiment is of a passive type. The IC chip 22 is configured to receive data sent from the RFID reader writer, and to send information (temperature information) stored in the memory to the RFID reader writer. In this embodiment, electromagnetic waves in 860 to 960 MHz, that is, electromagnetic waves in the UHF band, are used to send and receive data. The RFID tag 20 can be of an active type which includes a battery.

The IC chip 22 in this embodiment is an IC chip integrated with a sensor. The IC chip 22 in this embodiment includes the temperature sensor, and a control circuit that controls driving of the temperature sensor. The temperature sensor and the control circuit are electrically connected by wiring. The wiring is caused to adhere to the temperature sensor and the control circuit with a conductive adhesive agent. The conductive adhesive agent includes metal particles, such as a silver particle, and a curable resin, such as an epoxy resin or an acrylic resin. The IC chip need not include a temperature sensor. Alternatively, the belt 1 can include, outside the IC chip, a temperature sensor electrically connected to the IC chip.

The temperature sensor is formed of a thermistor in which the resistance value changes due to changes in temperature. The thermistor can also be a thermistor in which the resistance value decreases due to an elevation in temperature, such as an NTC thermistor or a CTR thermistor. The thermistor can also be a thermistor in which the resistance value increases due to an elevation in temperature, such as a PTC thermistor. The temperature sensor is configured to output a voltage or an electric current corresponding to changes in the resistance value of the thermistor. The IC chip 22 in this embodiment is configured to convert a numerical value of the voltage or the electric current outputted from the temperature sensor to a temperature value by the control circuit. The temperature sensor can be formed of a thermocouple. The thermocouple has a configuration in which two kinds of metal wire respectively including different components are connected to form a pair, and the thermoelectromotive force corresponding to temperature changes is outputted from a connection point between these metal wires.

The IC chip 22 in this embodiment is formed into a rectangular shape. The IC chip 22 is caused to adhere to the base material sheet 21 with an adhesive agent.

The antenna 23 has a conductor pattern p formed of a conductor. An example of the conductor that forms the conductor pattern p includes metal, such as aluminum or copper. The conductor pattern p can be formed by causing a metal wire to adhere to the base material sheet 21, by causing a metal foil to adhere to the base material sheet 21, by applying conductive ink to the base material sheet 21, or by etching the base material sheet 21, for example.

The conductors in this embodiment are formed into a linear shape having a line width of 1 mm or less.

The conductor pattern p includes a power feeding part p1, a pair of radiation parts (not shown in Figures), and a pair of transmission parts (not shown in Figures), the power feeding part p1 being electrically connected to the IC chip 22, the pair of radiation parts being formed on both sides of the power feeding part p1 in the longitudinal direction d1, the pair of transmission parts connecting the power feeding part p1 to the respective radiation parts.

The power feeding part p1 includes an annular part in which the starting point and the end point are located in the IC chip 22. Therefore, the power feeding part p1 has a function of generating an electric current by electromagnetic waves transmitted by the RFID reader writer.

As shown in Fig. 5, the power feeding part p1 includes connection parts p11 formed of a pair of conductors connected to the IC chip 22 in the lateral direction d2. The connection parts p11 formed of the pair of conductors include a first connection part p11a and a second connection part p11b, the first connection part p11a being connected to one side of the IC chip 22 in the lateral direction d2, the second connection part p11b being connected to the other side of the IC chip 22 in the lateral direction d2. That is, the first connection part p11a is connected to the IC chip 22 from the opposite side of the second connection part p11b in the lateral direction d2. The first connection part p11a and the second connection part p11b have the same length.

Each of the first connection part p11a and the second connection part p11b includes a proximal end portion p111 that overlaps with the IC chip 22. The entire proximal end portion p111 is formed on the IC chip 22. The proximal end portion p111 extends in the longitudinal direction d1. Each of the first connection part p11a and the second connection part p11b is formed in such a way as to overlap with the IC chip 22 from the protective sheet 24 side. Each of the first connection part p11a and the second connection part p11b includes a first part p1131 and a second part p1132, the first part p1131 extending on the base material sheet 21 from one end of the proximal end portion p111, the second part p 1132 extending on the base material sheet 21 from the other end of the proximal end portion p111. The first part p1131 of the first connection part p11a and the first part p1131 of the second connection part p11b extend opposite each other in the lateral direction d2. The second part p1132 of the first connection part p11a and the second part p1132 of the second connection part p11b extend opposite each other in the lateral direction d2. The first part p1311 and the second part p1132 are coupled to each other on the base material sheet 21. Therefore, each of the first connection part p11a and the second connection part p11b has a through hole p112 which extends on the base material sheet 21 from the IC chip 22. In other words, each of the first connection part p11a and the second connection part p11b has the through hole p112 which has an opening extending from the proximal end portion p111 toward a distal end side (an outer side in the lateral direction d2).

The power feeding part p 1 further includes a pair of power-feeding-part separating parts p12, a pair of turning parts (not shown in Figures), and a ring forming part (not shown in Figures), the pair of power-feeding-part separating parts p12 extending in the longitudinal directions d1 from each of the first connection part p11a and the second connection part p11b so as to separate from the IC chip 22, the pair of turning parts extending from the distal end portions of the respective power-feeding-part separating parts p12 toward one side in the lateral direction d2 (a direction away from the IC chip 22), the ring forming part connecting the distal end portions of the respective turning parts to form a ring shape.

The transmission parts have a function of transmitting electromagnetic waves and an electric current between the power feeding part p1 and the radiation parts. Each transmission part extends in the longitudinal direction d1 so as to separate the power feeding part p1 from the radiation part. To be more specific, each transmission part includes a pattern connection part and a transmission-part separating part, the pattern connection part being connected to the power-feeding-part separating part p12 of the power feeding part p1 from one side in the lateral direction d2 (a direction approaching the IC chip 22), the transmission-part separating part extending from the pattern connection part so as to be away from the IC chip 22 in the longitudinal direction d1.

Each radiation part has a function of sending and receiving electromagnetic waves. A radiation part provided on one end side of the RFID tag 20 in the longitudinal direction d1 and a radiation part provided on the other end side of the RFID tag 20 in the longitudinal direction d1 are formed so as to be line symmetric with respect to a straight line which passes through the center of the IC chip 22 and which extends in the lateral direction d2. The distal end of each radiation part is not connected to another part but is free, thus forming an open end.

Each radiation part is formed such that a plurality of extension parts extending in the longitudinal direction d1 and a plurality of turning part extending in the lateral direction d2 are alternately arranged, thus reciprocating in the longitudinal direction d1. To be more specific, each radiation part includes a first extension part, a first turning part, a second extension part, a second turning part, and a third extension part, the first extension part extending along the extension line of the transmission part (the transmission-part separating part) (in the longitudinal direction d1 from the distal end portion of the transmission-part separating part), the first turning part extending from the distal end portion of the first extension part in such a way as to be away from the IC chip 22 in the lateral direction d2, the second extension part extending from the distal end portion of the first turning part in such a way as to approach the IC chip 22 in the longitudinal direction d1, the second turning part extending from the distal end portion of the second extension part in such a way as to approach the IC chip 22 in the lateral direction d2, the third extension part extending from the distal end portion of the second turning part in such a way as to be away from the IC chip 22 in the longitudinal direction.

The RFID tag 20 in this embodiment is provided such that, at each connection part of the conductor pattern p, the plurality of conductors are connected to the IC chip 22 in the width direction D2 of the belt 1 (the belt body 10). Specifically, the RFID tag 20 is provided such that the first connection part p11a and the second connection part p11b of the power feeding part p1 are connected to the IC chip 22 in the width direction D2 of the belt body 10. To be more specific, the first part p1131 and the second part p1132 of the first connection part p11a and the first part p1131 and the second part p1132 of the second connection part p11b extend on the base material sheet 21 along the width direction D2 from the IC chip 22. When the belt 1 passes through the pulley, there may be cases in which the belt 1 is expanded/contracted in the width direction D2 due to dishing. However, compared with the amount of expansion/contraction in the length direction D1, the amount of expansion/contraction in the width direction D2 is small. In this embodiment, at each connection part at which the conductors have the smallest width (to be more specific, the first part p1131 and the second part p1132), the conductors are connected to the IC chip 22 from the width direction D2. Therefore, in the belt 1 of the belt drive system 100, disconnection of the first connection part p11a and the second connection part p11b of the RFID tag 20 is suppressed.

To cause the above-mentioned advantageous effect to be exhibited more remarkably, the IC chip 22 can be disposed to be located at a center part in the belt width direction D2. The IC chip 22 can also be disposed to be located on the back surface side of the tooth parts 112.

In the RFID tag 20 in this embodiment, the conductors are formed into a linear shape having a line width of 1 mm or less. The line width of the first connection part 11a and the second connection part 11b is smaller than the size of the IC chip 22. In this regard, as a result of studies conducted by the inventors of the present invention, it is known that, in the case in which the conductor pattern p has a large line width, compared with the case in which the conductor pattern has a small line width, the conductors tend to be easily affected by a bending load caused by the pulley 2 via the belt body 10 or a flow of rubber components at the time of molding the belt body 10, so that disconnection, such as partial cracking, easily occurs. Particularly, it is known that disconnection easily occurs at a boundary (for example, the first part p1131 and the second part p1132) between a region of the conductor which overlaps with the IC chip 22 and a region of the conductor which does not overlap with the IC chip 22. In contrast, in the RFID tag 20 in this embodiment, the conductors are formed into a linear shape having a line width of 1 mm or less, thus being less likely to be affected by a bending load caused by the pulley 2 via the belt body 10 compared with conductors having a large line width. Thus, the RFID tag 20 in this embodiment is preferable.

In this embodiment, in addition to the above, the RFID tag 20 is provided such that the pattern connection parts of the transmission parts are connected to the separating parts p12 of the power feeding parts p1 in the width direction D2 of the belt body 10. Therefore, in this embodiment, disconnection of the pattern connection parts is also suppressed.

In this embodiment, the separating parts p12, the turning parts, and the ring forming part of the power feeding part p1, the transmission parts, and the radiation parts form extension parts of the conductor pattern p. The RFID tag 20 in this embodiment is provided such that such extension parts extend in the length direction D1 of the belt body 10.

The protective sheet 24 is formed of a film made of resin substantially the same as a resin used for the base material sheet 21. The protective sheet 24 is made to overlap with the base material sheet 21 without positional deviation. The protective sheet 24 is caused to adhere to the base material sheet 21 with an adhesive agent. The RFID tag 20 need not include the protective sheet 24. However, in the case in which the conductor pattern p is formed by applying a metal foil or conductive ink, or by etching, thus being relatively fragile, it is preferable that the RFID tag 20 include the protective sheet 24.

Next, variations of the RFID tag can be used in the present invention will be described. Members or parts substantially the same as those of the RFID tag 20 in the above-mentioned embodiment are given the same reference numerals, and the description of such members or parts will be omitted.

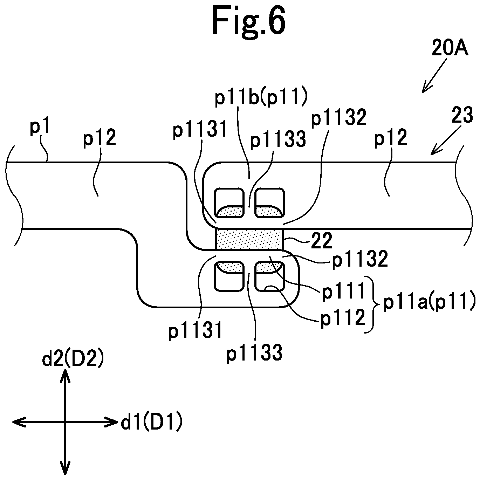

As shown in Fig. 6, in an RFID tag 20A of a variation 1, a power feeding part p1 includes a first connection part p11a and a separating part p12, the first connection part p11a being connected to an IC chip 22 from one side in the longitudinal direction d1, the separating part p12 being connected to the IC chip 22 from the other side in the longitudinal direction d1, and the proximal end portion of the separating part p12 forms a second connection part p11b. That is, the RFID tag 20A of the variation 1 is provided such that the proximal end portion (the second connection part p11b) of the separating part p12 is connected to the IC chip 22 in a length direction D1 of a belt body 10. In the same manner as the IC chip in the above-mentioned embodiment, the IC chip 22 is formed into a rectangular shape.

Each of the first connection part p11a and the second connection part p11b of the variation 1 has three portions which are electrically connected to the IC chip 22. As shown in Fig. 6, each of the first connection part p11a and the second connection part p11b includes a part at which the conductors are connected to one side and the other side of the IC chip 22 in the longitudinal direction d1, and a part at which the conductor is connected to the IC chip 22 in the lateral direction d2. Specifically, each of the first connection part p11a and the second connection part p11b includes a proximal end portion p111 the entirety of which is formed on the IC chip 22, and which extends in the longitudinal direction d1. Each of the first connection part p11a and the second connection part p11b also includes a first part p1131, a second part p1132, and a third part p1133, the first part p1131 extending on the base material sheet 21 from one end of the proximal end portion p111, the second part p1132 extending on the base material sheet 21 from the other end of the proximal end portion p111, the third part p1133 extending on the base material sheet 21 from the center part of the proximal end portion p111. The first part p1131 and the second part p1132 extend in the longitudinal direction d1. The third part p1133 of the first connection part p11a and the third part p1133 of the second connection part p11b extend opposite each other in the lateral direction d2. In addition, the first part p1311, the second part p1132, and the third part p1133 are coupled to each other on the base material sheet 21. Therefore, each of the first connection part p11a and the second connection part p11b has a pair of through holes p112 which extend on the base material sheet 21 along the lateral direction d2 from the IC chip 22. The RFID tag 20 shown in Fig. 5 is disposed such that the longitudinal direction d1 of the RFID tag 20 extends along the belt length direction D1 and hence, the connection direction of the conductors to the IC chip 22 is the belt width direction D2. In contrast, in the case of the RFID tag 20A of the variation 1, even when the RFID tag 20A is disposed such that the longitudinal direction d1 of the RFID tag 20A extends along either the belt length direction D1 or the belt width direction D2, the RFID tag 20A is included in the belt 1 such that the conductor is connected to the IC chip 22 (at at least one of three portions, namely in Fig. 6, the third part p1133) in the belt width direction D2.

The pair of through holes p112 are formed in each of the first connection part 11a and the second connection part 11b. The RFID tag 20A is disposed such that the respective through holes p112 overlap with four corner portions of the IC chip 22. In other words, in the RFID tag 20A, the conductors are formed so as not to overlap with the four corner portions of the IC chip 22.

In the RFID tag 20A of the variation 1, in the same manner as the RFID tag 20 in the above-mentioned embodiment, conductors are formed into a linear shape having a line width of 1 mm or less.

In the belt drive system 100, it is preferable that the RFID tag 20A of the variation 1 be provided such that at least one of the respective parts (the third part p1133 in Fig. 6) of each of the first connection part p11a and the second connection part p11b extends in the width direction D2 of the belt body 10. In addition, the extension parts of the conductor pattern p also extend in the width direction D2 of the belt body 10. In this case, compared with the case in which the extension parts extend in the length direction D1 of the belt body 10, the extension parts are less likely to be affected by a bending load caused by the pulley and hence, disconnection is suppressed.

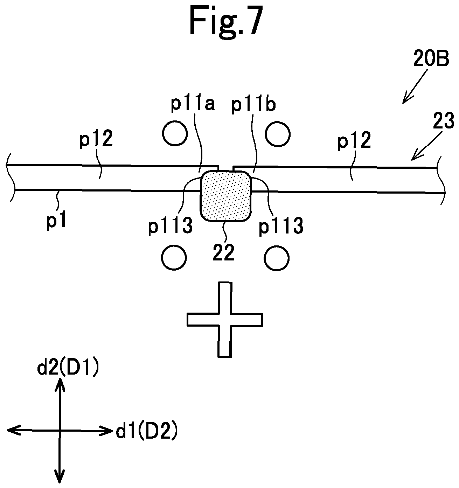

As shown in Fig. 7, in an RFID tag 20B of a variation 2, a power feeding part p1 includes a pair of separating parts p12 which extend from an IC chip 22 toward both sides in the longitudinal direction d1, and the proximal end portions of the pair of separating parts p12 form a first connection part p11a and a second connection part p11b. Each of the first connection part p11a and the second connection part p11b includes one part p113 which extends on a base material sheet 21 along the longitudinal direction d1 from the IC chip 22. In the same manner as the IC chip in the above-mentioned embodiment, the IC chip 22 is formed into a rectangular shape.

In the RFID tag 20B of the variation 2, each of the first connection part p11a and the second connection part p11b is directly formed on the base material sheet 21, and is formed in such a way as to overlap with the IC chip 22 from the base material sheet 21 side.

In the belt drive system 100, it is preferable that the RFID tag 20B of the variation 2 be provided such that the part p113 is connected to the IC chip 22 in the width direction D2 of the belt body 10 at each of the first connection part p11a and the second connection part p11b. In this case, the extension parts of the conductor pattern p also extend in the width direction of the belt body 10. Therefore, compared with the case in which the extension parts extend in the length direction D1 of the belt body 10, the extension parts are less likely to be affected by a bending load caused by the pulley and hence, disconnection is suppressed.

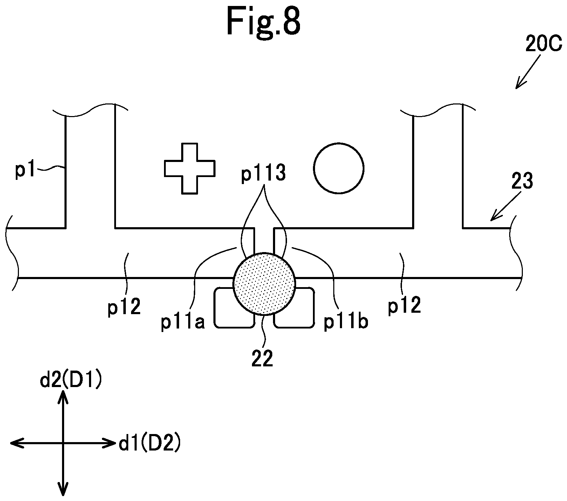

As shown in Fig. 8, in an RFID tag 20C of a variation 3, a power feeding part p1 includes a pair of separating parts p12 which extend from an IC chip 22 toward both sides in the longitudinal direction d1, and the proximal end portions of the pair of separating parts p12 form a first connection part p11a and a second connection part p11b. Each of the first connection part p11a and the second connection part p11b includes one part p113 which extends on a base material sheet 21 along the longitudinal direction d1 from the IC chip 22.

In the belt drive system 100, it is preferable that the RFID tag 20C of the variation 3 be provided such that the part p113 is connected to the IC chip 22 in the width direction D2 of the belt body 10 at each of the first connection part p11a and the second connection part p11b. In this case, the extension parts of the conductor pattern p also extend in the width direction of the belt body 10.

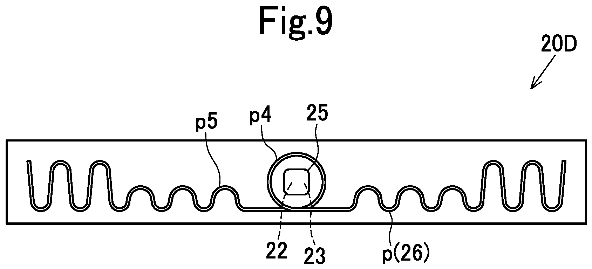

As shown in Fig. 9, an RFID tag 20D of a variation 4 differs from the above-mentioned respective modes particularly in the configuration of an antenna 23. Specifically, in the RFID tag 20D, an IC chip 22 and a core antenna 23 are embedded in a sealing material 25 made of resin, the core antenna 23 serving as an antenna 23 connected to the IC chip 22. The RFID tag 20D also includes a booster antenna 26 which is electromagnetically coupled to the core antenna 23 so as to extend a communication distance of the core antenna 23. The booster antenna 26 includes a conductor pattern p which is made of fiber, and which is formed into a linear shape by twisting conductive fiber. The conductor pattern p made of fiber includes a surrounding part p4 having an annular shape and an extension part p5 having a waveform shape, the surrounding part p4 surrounding the sealing material 25, the extension part p5 extending from the surrounding part p4 toward both sides in the longitudinal direction. The extension part p5 is formed such that the height of a waveform increases from the proximal end side toward the distal end side. The surrounding part p4 can be formed into a curved shape that partially covers the sealing material 25. That is, the surrounding part p4 and the extension part p5 can be formed into a continuous waveform shape. The line width of the booster antenna 26 is 1 mm or less.

In the case in which the RFID tag 20D of the variation 4 is provided to the belt drive system 100, the core antenna 23 is protected by the sealing material 25 and hence, a problem of disconnection seldom occurs. In addition, the conductor pattern p, which is made of metal fiber (specifically, made of stainless steel fiber), of the booster antenna 26 can absorb a bending load from the pulley 2 due to expansion/contraction property thereof in the extension direction of the conductor pattern p, and thus disconnection is effectively suppressed. For this reason, the RFID tag 20D of the variation 4 can be provided such that the booster antenna 26 extends along the width direction of the belt 1, or the booster antenna 26 extends along the length direction of the belt 1.

Next, one embodiment of a method for manufacturing the above-mentioned belt 1 will be described.

The method for manufacturing the belt 1 according to this embodiment includes a material preparation step of producing an unvulcanized rubber sheet, a primary molding step of molding the unvulcanized rubber sheet to obtain a primary molded body, an installation step of installing an RFID tag 20 into the primary molded body to obtain a tagged primary molded body, and a secondary molding step of further molding the tagged primary molded body to obtain a belt molded body (the belt body 10).

In the material preparation step, a blend which is obtained by blending the additive into the rubber component is kneaded to prepare a rubber composition, and the rubber composition is molded into a sheet shape by calender molding, thus producing the unvulcanized rubber sheet. In this embodiment, an inner rubber layer sheet, an outer rubber layer sheet, and an adhesive rubber sheet are produced as the unvulcanized rubber sheets, the inner rubber layer sheet forming an inner rubber layer 11, the outer rubber layer sheet forming an outer rubber layer 12, the adhesive rubber sheet forming an adhesive rubber layer 14. In addition, a reinforcing sheet for forming a reinforcing layer 15 is prepared.

In the material preparation step, core wires for forming a core layer 13 are immersed into an adhesive agent in a liquid state and, thereafter, are heated, thus obtaining core wires treated with the adhesive agent. In the case of adopting canvas to form the core layer 13, since commercially available canvas is already treated with an adhesive agent, it is possible to directly use the commercially available canvas.

In the material preparation step, the RFID tag 20 is treated with an adhesive agent. In the treatment with the adhesive agent in this step, a vulcanizing adhesive agent (for example, Chemlok made by LORD Corporation) is applied to the RFID tag 20, and solvent contained in the vulcanizing adhesive agent is removed by drying, thus obtaining the RFID tag 20 which is treated with the adhesive agent.

In the primary molding step, a tooth-part molding mold is used to mold tooth parts 112. The tooth-part molding mold has a cylindrical shape, and has tooth-part forming grooves which extend in the axial direction, and which are formed at predetermined intervals in the circumferential direction. In the primary molding step, each sheet is wound on the tooth-part molding mold to produce a primary layered product having a cylindrical shape. The primary layered product in this embodiment is formed of the reinforcing sheet, core wires, the inner rubber layer sheet, a release paper, and a rubber sleeve, the reinforcing sheet being brought into contact with the tooth-part molding mold, the core wires being wound on the reinforcing sheet, the inner rubber layer sheet being wound on the core wires in such a way as to sandwich the core wires between the inner rubber layer sheet and the reinforcing sheet, the release paper being wound on the inner rubber layer sheet in such a way as to be disposed on the inner rubber layer sheet, the rubber sleeve being disposed on the release paper.

In the primary molding step, an outer mold is also used which applies a pressure to the outer surface of the primary layered product.

Then, the primary layered product on which the outer mold is mounted is disposed in a high-temperature high-pressure can, and the inner rubber layer sheet is caused to flow toward the tooth-part forming grooves by pushing the inner rubber layer sheet toward the peripheral surface of the tooth-part molding mold by a pressure of the outer mold, thus producing a primary molded body in which tooth parts are molded.

In the primary molding step in this embodiment, the temperature of the tooth-part molding mold and the temperature of the outer mold are set to temperatures that cause the rubber component of the inner rubber layer sheet to flow, but that do not cause vulcanization in the inner rubber layer sheet. The temperature of the tooth-part molding mold and the temperature of the outer mold are preferably 110°C or more, and are more preferably 120°C or more, although these may be suitably changed depending on the kind of rubber component of the inner rubber layer sheet. The temperature of the tooth-part molding mold and the temperature of the outer mold are preferably 130°C or less. The rubber sleeve is interposed between the contact surface of the outer mold with the primary molded body and the inner rubber layer sheet of the primary molded body and hence, the temperature of the tooth-part molding mold is relatively important in causing the rubber component of the inner rubber layer sheet to flow.

It is preferable that, in the primary molding step, the primary layered product be processed for 15 minutes or more from a point in time at which a pressure and a temperature of the tooth-part molding mold become set values.

In the installation step, the RFID tag 20 is installed in the primary molded body. In this embodiment, the RFID tag 20 is installed between the primary molded body and one or a plurality of adhesive rubber sheets, which are wound on the primary molded body. That is, the RFID tag 20 is installed in such a way as to be brought into contact with the adhesive rubber sheet. At this point of operation, the surface of the primary molded body can be cut to form a groove, in which the RFID tag 20 is installed, on the primary molded body. Next, the outer rubber layer sheet is disposed on the wound adhesive rubber sheet to produce the tagged primary molded body. Alternatively, it is also possible to produce a tagged primary molded body in which the RFID tag 20 is sandwiched between the first adhesive rubber sheet and the second adhesive rubber sheet, the first adhesive rubber sheet being wound on the primary molded body, the second adhesive rubber sheet being wound on the first adhesive rubber sheet in such a way as to be disposed on the first adhesive rubber sheet. Alternatively, the outer rubber layer sheet can be directly wound on the primary molded body. In this case, a tagged primary molded body can be produced in which the RFID tag 20 is installed on the peripheral surface of the primary molded body.

In the secondary molding step in this embodiment, the outer rubber layer sheet is wound on the tagged primary molded body, and the release paper is further wound thereon, thus producing a secondary layered product. Then, the secondary layered product on which an outer mold is mounted is disposed in a high-temperature high-pressure can, and the secondary layered product is then vulcanized. With such operations, the inner rubber layer 11, the outer rubber layer 12, and the adhesive rubber layer 14 are formed, while the inner rubber layer 11 is caused to adhere to the core layer 13, and the outer rubber layer 12 is caused to adhere to the core layer 13 with the adhesive rubber layer 14 interposed therebetween, thus obtaining the belt molded body (the belt body 10).

In the secondary molding step in this embodiment, the temperature of the tooth-part molding mold is set to a temperature at which vulcanization occurs in the unvulcanized rubber sheet. The temperature of the tooth-part molding mold is preferably 165°C or more, although this may be suitably changed depending on components of a vulcanizing agent or the like in the unvulcanized rubber sheet. Also in the secondary molding step, in the same manner as the primary molding step, the temperature of the tooth-part molding mold is relatively important in vulcanizing rubber components of the respective unvulcanized rubber sheets.

In the secondary molding step, it is preferable to process the secondary layered product for 15 minutes or more from a point in time at which the temperature of the tooth-part molding mold becomes a set value.

According to the manufacturing method of this embodiment, before the RFID tag 20 is installed, the inner rubber layer 11 (particularly, the tooth parts 112) is molded, in which the amount of flow of rubber is excessively large at the time of molding, and hence, damage to the RFID tag 20 at the time of molding the belt 1 is suppressed.

As has been described above, the belt 1 according to this embodiment is the belt 1 including the RFID tag 20, wherein the RFID tag 20 includes the IC chip 22, and the antenna 23 which is formed of the conductors, the antenna 23 includes the connection parts ρ11 which are connected to the IC chip 22, and at the connection parts p11, the conductors are connected to the IC chip 22 in the width direction of the belt.

With such a configuration, the connection parts p11 of the antenna 23 are connected to the IC chip 22 in the width direction of the belt 1 and hence, disconnection of the connection parts p1 of the antenna 23 is suppressed. That is, damage to the RFID tag 20 is suppressed.

In the belt 1 according to this embodiment, at the connection parts p11, the plurality of conductors are connected to the IC chip 22, and at least one of the plurality of conductors is connected to the IC chip 22 in the width direction of the belt 1.

With such a configuration, disconnection of the conductor connected to the IC chip 22 in the width direction of the belt 1 is suppressed, and connection of the conductor to the IC chip 22 is easily maintained and hence, even when another conductor having different connection direction is disconnected, performance of the antenna 23 can be maintained.

The belt 1 according to this embodiment includes the belt body 10 which includes the core layer 13, the inner rubber layer 11 or the outer rubber layer 12, and the adhesive rubber layer 14, the core layer 13 being formed of core wires or canvas, the inner rubber layer 11 being the first rubber layer which is disposed on the core layer 13 from the inner side, the outer rubber layer 12 being the second rubber layer which is disposed on the core layer 13 from the outer side, the adhesive rubber layer 14 causing the inner rubber layer 11 or the outer rubber layer 12 to adhere to the core layer 13, and the RFID tag 20 is embedded in the adhesive rubber layer 14.

With such a configuration, the RFID tag 20 is embedded in the adhesive rubber layer 14 and hence, the RFID tag 20 has preferable adhesiveness with respect to the belt body 10.

The belt 1 according to this embodiment includes: the core layer 13 formed of core wires or canvas; the inner rubber layer 11 being the first rubber layer which is disposed on the core layer 13 from the inner side or the outer rubber layer 12 being the second rubber layer which is disposed on the core layer 13 from the outer side, in which the RFID tag 20 is disposed at a boundary between the core layer 13 and the inner rubber layer 11 or the outer rubber layer 12, and the conductor is formed of a metal foil or a conductive fiber.

In the case in which the RFID tag 20 is disposed between the core layer 13 and the inner rubber layer 11 or the outer rubber layer 12, a manufacturing method can be simplified compared with the case in which the RFID tag 20 is embedded in the inner rubber layer 11 or the outer rubber layer 12. However, when the RFID tag 20 is disposed between the core layer 13 and the inner rubber layer 11 or the outer rubber layer 12, a problem may occur in which interlayer peeling easily occurs at the boundary. In contrast, according to the above-mentioned configuration, the conductor pattern is formed of a metal foil or a conductive fiber having a small thickness and a small width and hence, it is possible to suppress peeling of the core layer 13 from the inner rubber layer 11 or the outer rubber layer 12 at the boundary.

The belt drive system 100 according to this embodiment is the belt drive system 100 including the pulleys 2, and the belt 1 which is wound around the pulleys 2, wherein the belt 1 includes the belt body 10, and the RFID tag 20 which is included in the belt body 10, the belt body 10 is expanded/contracted and deformed by receiving a bending load from the pulleys 2, and the RFID tag 20 is included in the belt body 10 at a position at which the expansion/contraction rate of the belt body 10 is 10% or less, preferably the expansion/contraction rate is 3% or less.

With such a configuration, the RFID tag 20 is included in the belt body 10 at the position at which the expansion/contraction rate of the belt body 10 is 10% or less, or 3% or less and hence, the RFID tag 20 becomes less likely to receive a bending load caused by the pulleys 2 via the belt body 10, and thus damage to the RFID tag 20, particularly disconnection of the antenna 23, can be suppressed.

The method for manufacturing the belt 1 according to this embodiment is the method for manufacturing the belt 1 including the RFID tag 20, in which the RFID tag 20 includes the IC chip 22, and the antenna 23 formed of the conductors in the belt, the antenna 23 including the connection part p 11 which is connected to the IC chip 22, the method including: the primary molding step of molding an unvulcanized rubber sheet to obtain a primary molded body; the installation step of installing the RFID tag 20 in the primary molded body to obtain a tagged primary molded body; and the secondary molding step of further molding the tagged primary molded body to obtain a belt molded body, to thereby manufacture the belt in which, at the connection parts p11, the conductor is connected to the IC chip 22 in the width direction of the belt 1.

With such a configuration, compared with the case in which an RFID tag 20 is installed in an unvulcanized rubber sheet to produce a belt molded body, the amount of flow of rubber is reduced in the secondary molding step by an amount corresponding to the formation of the primary molded body and hence, damage to the RFID tag 20 caused by the flow of rubber, particularly, disconnection of the antenna 23, can be suppressed.

In the method for manufacturing the belt 1 according to this embodiment, the belt 1 includes the belt body 10 which includes the core layer 13, the inner rubber layer 11 or the outer rubber layer 12, and the adhesive rubber layer 14, the core layer 13 being formed of core wires or canvas, the inner rubber layer 11 being the first rubber layer which is disposed on the core layer 13 from the inner side, the outer rubber layer 12 being the second rubber layer which is disposed on the core layer 13 from the outer side, the adhesive rubber layer 14 causing the inner rubber layer 11 or the outer rubber layer 12 to adhere to the core layer 13, the rubber sheet includes a rubber sheet for a rubber layer and an adhesive rubber sheet, the rubber sheet forming the inner rubber layer 11 or the outer rubber layer 12, the adhesive rubber sheet forming the adhesive rubber layer 14, and in the installation step, the RFID tag 20 is installed in such a way as to be brought into contact with the adhesive rubber sheet.

With such a configuration, in the installation step, the RFID tag 20 is installed in such a way as to be brought into contact with the adhesive rubber sheet and hence, it is possible to cause the RFID tag 20 to be embedded in the adhesive rubber layer 14 in the secondary molding step. The RFID tag embedded in the adhesive rubber layer 14 has preferable adhesiveness with respect to the belt body 10.

Although one embodiment has been described above as an example, the belt, the belt drive system, and the method for manufacturing a belt according to the present invention are not limited to the configurations of the above-mentioned embodiment. Further, the belt, the belt drive system, and the method for manufacturing a belt according to the present invention are not limited by the manner of operation and advantageous effects described above. Various modifications of the belt, the belt drive system, and the method for manufacturing a belt according to the present invention are conceivable without departing from the gist of the present invention.

For example, the belt of the present invention can also be a transmission belt, such as a V belt, a V-ribbed belt, or a flat belt.

The V belt can include a plurality of protruding parts protruding inward. The plurality of protruding parts are provided at a constant pitch in the belt length direction. Recessed portions are formed between adjacent protruding parts. The protruding parts can be formed to be parallel to the belt width direction, or can be formed to extend obliquely with respect to the belt width direction.

The V-ribbed belt includes one or a plurality of protruding ridge parts protruding inward and formed over the belt length direction. The protruding ridge part has a substantially trapezoidal shape in cross section orthogonal to the belt length direction.

The belt of the present invention can also be a double cog belt. The double cog belt includes, on the inner peripheral surface side thereof, protruding parts protruding inward and provided at a constant pitch in the belt length direction, and includes, on the outer peripheral surface side thereof, protruding parts protruding outward and provided at a constant pitch in the belt length direction.

The belt of the present invention can also be a serpentine belt. The serpentine belt includes, on the inner peripheral surface side, a plurality of protruding parts protruding inward and provided at a constant pitch in the belt length direction, and includes, on the outer peripheral surface side, one or a plurality of protruding ridge parts protruding outward and formed over the belt length direction.

In the case in which an RFID tag is installed in the double cog belt or the serpentine belt, in a primary molding step, a primary molded body for an inner rubber layer on which protruding parts are molded is produced using the unvulcanized rubber sheet, and a primary molded body for an outer rubber layer on which protruding parts or protruding ridge parts are molded is produced using the unvulcanized rubber sheet. Next, in an installation step, core wires are wound on the primary molded body for the inner rubber layer, and one or a plurality of adhesive rubber sheets are further wound thereon. Then, the RFID tag is installed in such a way as to be brought into contact with the adhesive rubber sheet and, thereafter, the primary molded body for the outer rubber layer is wound thereon, thus producing a tagged primary molded body. In the case in which the RFID tag is installed between the adhesive rubber sheet and the primary molded body for the outer rubber layer, a groove in which the RFID tag is installed can be formed on the primary molded body for the outer rubber layer. Next, in a secondary molding step, the tagged primary molded body is vulcanized to form a belt body which includes an inner rubber layer, a core layer, an adhesive rubber layer, and an outer rubber layer, the inner rubber layer including the protruding parts, the core layer being disposed on the inner rubber layer, the adhesive rubber layer being disposed on the core layer, the outer rubber layer being disposed on the adhesive rubber layer and including the protruding parts or the protruding ridge parts.

The inner rubber layer and the outer rubber layer of the flat belt are formed into a strip shape.

The belt of the present invention can be a conveyance belt.

In the belt 1 of the above-mentioned embodiment, the belt body 10 includes the adhesive rubber layer 14. However, the belt of the present invention is not limited to such a configuration, and the belt body need not include the adhesive rubber layer, that is, the inner rubber layer or the outer rubber layer can be directly disposed on the core layer. In this case, the RFID tag can be disposed at a boundary between the core layer and the inner rubber layer, or can be disposed at a boundary between the core layer and the outer rubber layer. It is preferable that, in the RFID tag disposed at the boundary, the conductors have a linear shape with the line width of 1 mm or less, as in the case of the RFID tag 20 in the above-mentioned embodiment or the RFID tag 20A of the variation 1.

With reference to the method for manufacturing a belt of the present invention, the primary layered product produced in the primary molding step can be formed of the reinforcing sheet, the inner rubber layer sheet, and a release sheet, the reinforcing sheet being brought into contact with the belt molded body, the inner rubber layer sheet being wound on the reinforcing sheet in such a way as to be disposed on the reinforcing sheet, the release sheet being wound on the inner rubber layer sheet in such a way as to be disposed on the inner rubber layer sheet. In this case, in the installation step, a configuration can be adopted in which the adhesive rubber sheet is wound on the primary molded body and, thereafter, the RFID tag 20 is installed in such a way as to be brought into contact with the adhesive rubber sheet, thus producing a tagged primary molded body. In the secondary molding step, a configuration can be adopted in which the outer rubber layer sheet is wound on the adhesive rubber sheet of the tagged primary molded body in such a way as to be disposed on the adhesive rubber sheet, and the release sheet is further wound on the outer rubber layer sheet in such a way as to be disposed on the outer rubber layer sheet, thus producing a secondary layered product.

### [Example]

Hereinafter, the present invention will be further described with reference to an example.

First, a belt drive system including three pulleys (same mode) as shown in Fig. 1 was designed. Basic specifications of this belt drive system are as shown in Table 1, and a toothed belt was adopted for the belt. In addition, a plurality of belts having different thicknesses were produced to construct belt drive systems, and an expansion/contraction rate of each belt was measured. Then, as shown in Table 2, an RFID tag was embedded in each belt at a position showing a certain expansion/contraction rate to prepare a belt including the RFID tag. Performance of each belt was evaluated based on an evaluation method described below.

**[Table 1]**

| Specifications of belt drive system | |
|---|---|
| Length of belt | 800 mm |
| Width of belt | 30 mm |
| The number of teeth of pulley | 42 |
| Pulley pitch circumference | 336 mm |
| Circumference of pulley | 336 mm |
| Outer diameter of pulley | 105.58 mm |
| Pitch diameter of pulley | 106.95 mm |
| Rotational speed of driving pulley | 5500 rpm |
| Peripheral speed of belt | 30.8 m/sec |

### [Manufacturing example 1: manufacture of belt including RFID tag in outer region relative to pitch line PL]

### (Primary molding step)

For a tooth-part molding mold, a tooth-part molding mold having a cylindrical shape was used, the tooth-part molding mold having tooth-part forming grooves which extend in the axial direction, and which are formed at certain intervals in the circumferential direction. First, a reinforcing sheet for forming a reinforcing layer was wound on this tooth-part molding mold and, thereafter, an inner rubber layer sheet for forming an inner rubber layer was wound on the reinforcing sheet in such a way as to be disposed on the reinforcing sheet. Next, core wires were helically wound on the inner rubber layer sheet. A release paper was further wound on the top of the core wires to produce a primary layered product having a cylindrical shape. Then, the primary layered product on which an outer mold is mounted was disposed in a high-temperature pressurized can, the pressure was set to a certain value, and the temperature of the tooth-part molding mold was set to 120°C, and then the primary layered product was processed for 15 minutes.

### (Installation step)

In the belt drive system shown in Table 1, calculation was made for a region, in the thickness direction, in which an expansion/contraction rate takes a certain value, and a primary molded body was cut until such a region appears. Next, the surface of the cut primary molded body was dissolved with toluene to form a groove in the primary molded body, and an RFID tag subjected to adhesion treatment was installed along the groove, thus producing a tagged primary molded body.

### (Secondary molding step)

An outer rubber layer sheet for forming an outer rubber layer was wound on the tagged primary molded body and, thereafter, a release paper was wound on the outer rubber layer sheet, thus producing a secondary layered product. Then, the secondary layered product on which an outer mold is mounted was disposed in a high-temperature pressurized can, the pressure was set to a certain value, and the temperature of the tooth-part molding mold was set to 165°C, and then the secondary layered product was vulcanized for 15 minutes, thus producing a belt molded body (belt).

### [Manufacturing example 2: manufacture of belt including RFID tag in inner region relative to pitch line PL]

### (Primary molding step)

A reinforcing sheet for forming a reinforcing layer was wound on a tooth-part molding mold which is the same as that used in the manufacturing example 1 and, thereafter, an inner rubber layer sheet for forming an inner rubber layer was wound on the reinforcing sheet in such a way as to be disposed on the reinforcing sheet, and a release paper was further wound on the inner rubber layer sheet, thus producing a primary layered product. Then, the primary layered product on which an outer mold is mounted was disposed in a high-temperature pressurized can, the pressure was set to a certain value, and the temperature of the tooth-part molding mold was set to 120°C, and then the primary layered product was processed for 15 minutes.

### (Installation step)

An adhesive rubber sheet was wound on this primary molded body and, thereafter, an RFID tag subjected to adhesion treatment was installed in the adhesive rubber sheet, and core wires were helically wound on the adhesive rubber sheet, thus producing a tagged primary molded body.

### (Secondary molding step)

A belt molded body (belt) was produced in the same manner as the manufacturing example 1.

### [Bending fatigue test]

The designed belt drive system was driven to cause the belt to run at 5,500 rpm × 70 hours (7 hours per day for 10 days in total).

### [Evaluation of radio wave intensity]

A commercially available reader writer which is capable of sending and receiving electromagnetic waves in the UHF band was used for evaluation. In the evaluation, the reader writer was moved close to each belt at a position at which the RFID tag is embedded, and it was observed whether electromagnetic waves from the RFID tag have an intensity that allows reception by the reader writer. When the reader writer could not receive electromagnetic waves, it was evaluated that electromagnetic waves from the RFID tag do not have a sufficient radio wave intensity (bad).

### [Evaluation of antenna disconnection]

The RFID tags were taken out from the belts after running, and the presence or absence of disconnection of the antennas was visually observed with a loupe.

**[Table 2]**

| | Test example 1 | Test example 2 | Test example 3 | Test example 4 | Test example 5 | Test example 6 | Test example 7 |
|---|---|---|---|---|---|---|---|
| Mode of RFID tag | Fig. 5 | Fig. 5 | Fig. 5 | Fig. 5 | Fig. 6 | Fig. 6 | Fig. 6 |
| Connection direction of respective parts at each connection part | All (two) being connected in width direction | All (two) being connected in width direction | All (two) being connected in width direction | All (two) being connected in width direction | One of three being connected in width direction | One of three being connected in width direction | One of three being connected in width direction |
| Installation portion in belt body | Outer rubber layer | Inner rubber layer | Outer rubber layer | Inner rubber layer | Outer rubber layer | Inner rubber layer | Outer rubber layer |
| Expansion/contraction rate at installation portion | Outer region 10% | Inner region 10% | Outer region 3% | Inner region 3% | Outer region 10% | Inner region 10% | Outer region 3% |
| Adhesion treatment on RFID tag | Performed | Performed | Performed | Performed | Performed | Performed | Performed |
| Presence or absence of disconnection of antenna | Not present | Not present | Not present | Not present | Not present | Not present | Not present |
| Good/bad of radio wave intensity | Good | Good | Good | Good | Good | Good | Good |

| | Test example 8 | Test example 9 | Test example 10 | Test example 11 | Test example 12 | Test example 13 | Test example 14 |
|---|---|---|---|---|---|---|---|
| Mode of RFID tag | Fig. 6 | Fig. 5 | Fig. 6 | Fig. 7 | Fig. 8 | Fig. 5 | Fig. 6 |
| Connection direction of respective parts at each connection part | One of three being connected in width direction | All (two) being connected in width direction | One of three being connected in width direction | All (two) being connected in length direction | All (two) being connected in length direction | All (two) being connected in width direction | One of three being connected in width direction |
| Installation portion in belt body | Inner rubber layer | Outer rubber layer | Outer rubber layer | Outer rubber layer | Outer rubber layer | Vicinity of tooth parts of inner rubber layer | Vicinity of tooth parts of inner rubber layer |
| Expansion/contraction rate at installation portion | Inner region 3% | Outer region 20% | Outer region 20% | Outer region 10% | Outer region 10% | Inner region 10% | Inner region 10% |
| Adhesion treatment on RFID tag | Performed | Performed | Performed | Performed | Performed | Performed | Performed |
| Presence or absence of disconnection of antenna | Not present | Present | Present | Present | Present | Present | Present |
| Good/bad of radio wave intensity | Good | Bad | Bad | Bad | Bad | Bad | Bad |

As shown in Table 2, in the cases in which the conductor is connected to the IC chip in the width direction of the belt at the connection part of the antenna of the RFID tag, disconnection did not occur at the connection part, that is, damage did not occur in the RFID. The reason for this is considered to be that a load from a pulley is easily dispersed across the entire connection part which extends in the width direction of the belt. In contrast, in the cases in which the conductor is connected to the IC chip in the length direction of the belt at the connection part of the antenna, disconnection occurred at the connection part, that is, damage to RFID was observed. The reason for this is considered to be that a load from a pulley is likely to be locally applied to the connection part which extends in the length direction of the belt.

### REFERENCE SIGNS LIST

1: belt
10: belt body
11: inner rubber layer (first rubber layer)
111: base part
112: tooth part
12: outer rubber layer (second rubber layer)
13: core layer
131: core wire
132: adhesive rubber
14: adhesive rubber layer
15: reinforcing layer
PL: pitch line
A: inner region
B: outer region
20: RFID tag
21: base material sheet
22: IC chip
23: antenna (core antenna, primary antenna)
p: conductor pattern
p1: power feeding part
p11: connection part
p11a: first connection part
p11b: second connection part
p111: proximal end portion
p112: through hole
p113: part
p1131: first part
p1132: second part
p1133: third part
p12: separating part
24: protective sheet
25: sealing material
26: booster antenna (secondary antenna)
p4: surrounding part
p5: extension part
2: pulley
100: belt drive system

## Claims

1. A belt comprising an RFID tag, wherein
the RFID tag includes an IC chip, and an antenna which is formed of a conductor,
the antenna includes a connection part which is connected to the IC chip, and
at the connection part, the conductor is connected to the IC chip in a width direction of the belt.

2. The belt according to claim 1, wherein, at the connection part, a plurality of conductors are connected to the IC chip, and at least one of the plurality of conductors is connected to the IC chip in the width direction of the belt.

3. The belt according to claim 1 or 2, comprising a belt body which includes a core layer, a first rubber layer or a second rubber layer, and an adhesive rubber layer, the core layer being formed of a core wire or canvas, the first rubber layer being disposed on the core layer from one side, the second rubber layer being disposed on the core layer from an other side, the adhesive rubber layer causing the first rubber layer or the second rubber layer to adhere to the core layer, wherein
the RFID tag is embedded in the adhesive rubber layer.

4. The belt according to claim 1 or 2, comprising: a core layer formed of a core wire or canvas; and a first rubber layer disposed on the core layer from one side or a second rubber layer disposed on the core layer from an other side, wherein
the RFID tag is disposed at a boundary between the core layer and the first rubber layer or the second rubber layer, and
the conductor is formed of a metal foil or a conductive fiber.

5. A belt drive system comprising: a pulley; and the belt according to any one of claims 1 to 4 which is wound around the pulley, wherein
the belt includes a belt body and the RFID tag which is included in the belt body,
the belt body is expanded/contracted and deformed by receiving a bending load from the pulley, and
the RFID tag is included in the belt body at a position at which an expansion/contraction rate of the belt body is 10% or less.

6. The belt drive system according to claim 5, wherein the RFID tag is included in the belt body at a position at which the expansion/contraction rate of the belt body is 3% or less.

7. A method for manufacturing a belt including an RFID tag, in which the RFID tag includes an IC chip, and an antenna formed of a conductor, the antenna including a connection part which is connected to the IC chip, the method including:
a primary molding step of molding an unvulcanized rubber sheet to obtain a primary molded body;
an installation step of installing the RFID tag in the primary molded body to obtain a tagged primary molded body; and
a secondary molding step of further molding the tagged primary molded body to obtain a belt molded body, to thereby manufacture the belt in which, at the connection part, the conductor is connected to the IC chip in a width direction of the belt.

8. The method for manufacturing a belt according to claim 7, wherein
the belt includes a belt body which includes a core layer, a first rubber layer or a second rubber layer, and an adhesive rubber layer, the core layer being formed of a core wire or canvas, the first rubber layer being disposed on the core layer from one side, the second rubber layer being disposed on the core layer from an other side, the adhesive rubber layer causing the first rubber layer or the second rubber layer to adhere to the core layer,
the rubber sheet includes a rubber sheet for a rubber layer and an adhesive rubber sheet, the rubber sheet forming the first rubber layer or the second rubber layer, the adhesive rubber sheet forming the adhesive rubber layer, and
in the installation step, the RFID tag is installed in such a way as to be brought into contact with the adhesive rubber sheet.
